# EUROPÄISCHE PATENTSCHRIFT

(11) **EP 2 491 257 B1**
(45) Veröffentlichungstag und Bekanntmachung des Hinweises auf die Patenterteilung: **21.12.2016**
(21) Anmeldenummer: 10741966.5
(22) Anmeldetag: 11.08.2010
(51) Int. Cl.: F16B 12/14, F16B 12/20

(54) **VERBINDUNGSMITTEL FÜR BAUELEMENTE UND MÖBEL**
JOINING MEANS FOR COMPONENTS AND FURNITURE
MOYEN DE LIAISON POUR DES ÉLÉMENTS DE CONSTRUCTION ET DES MEUBLES

(30) Priorität: 19.10.2009 DE 102009049967; 24.12.2009 DE 102009060456
(43) Veröffentlichungstag der Anmeldung: 29.08.2012
(73) Patentinhaber: Apple Inc., Cupertino, CA 95014 (US)
(72) Erfinder: POLENZ, Jürgen, 59348 Lüdinghausen (DE)
(74) Vertreter: Lang, Johannes
(86) Internationale Anmeldenummer: PCT/EP2010/061686
(87) Internationale Veröffentlichungsnummer: WO 2011/047897

(56) Entgegenhaltungen:
- EP-A1- 0 564 889
- WO-A1-2006/103500
- DE-U1- 20 013 178
- GB-A- 903 767
- US-A- 4 886 407

## Beschreibung

Die Erfindung betrifft ein Verbindungsmittel zum lösbaren Verbinden benachbarter Bauelemente, Möbel oder Teilen von diesen, mit zwei miteinander zu verbindenden Kupplungselementen, wobei das erste Kupplungselement einen In einem Gehäuse in Längsachsenrichtung verstellbaren Stift und das zweite Kupplungselement eine Aufnahme für diesen Stift aufweist.

Derartige Verbindungsmittel werden eingesetzt, um lösbare Verbindungen zwischen benachbarten Bauelementen, Möbeln oder Teilen von diesen herzustellen. Die Verbindungsmittel bestehen aus zwei miteinander korrespondierenden Kupplungselementen, von denen eines einen in seiner Längsachsenrichtung verstellbaren Stift aufweist. Dieser verschwindet beim Herstellen des Verbindungsmittels in der gegenüber liegenden Aufnahme des zweiten Kupplungselementes, wodurch eine sichere und dauerhafte Verbindung geschaffen Ist. In einer beispielhaften Anwendung werden Wandverkleidungen aus derartigen Bauelementen zusammengesetzt, z.B. Wandverkleidungen für Ladenlokale, in die häufig Monitore, Displays oder anderen elektronische Einrichtungen integriert werden. Dabei müssen stabile Tragwerke für diese Verkleidung mit diversen Vor- und Rücksprüngen, Einbauten, Fächern etc. vor Ort gebaut werden. Die Anforderungen an die Statik eines solchen Tragwerkes sind selbstverständlich sehr hoch. Ähnliches gilt für die Exaktheit dieser Verkleidungen. Übergänge, Anschlüsse von Verkleidungspaneelen untereinander und im Bereich von Boden und Decke, Winkel, Ecken, Fugen etc. müssen in ihrer Exaktheit höchsten Ansprüchen genügen. Dokument DE 200 13 178 U1 offenbart ein Verbindungsmittel zum lösbaren Verbinden eines ersten Bauteils und eines zweiten Bauteils, insbesondere zum lösbaren Verbinden von Möbel- oder Maschinenteilen, umfassend ein an dem ersten Bauteil angeordnetes erstes Verbindungselement und ein an dem zweiten Bauteil angeordnetes zweites Verbindungselement, wobei das erste Verbindungselement und das zweite Verbindungselement im verbundenen Zustand der Bauteile lösbar miteinander verbunden sind und eines der Verbindungselemente ein Halteteil umfasst, das in einer Haltestellung so mit dem anderen der Verbindungselemente zusammenwirkt, dass eine Relativbewegung des ersten Verbindungselements und des zweiten Verbindungselements längs einer Verbindungsrichtung verhindert wird, und das in einer Freigabestellung eine Relativbewegung des ersten Verbindungselements und des zweiten Verbindungselements längs der Verbindungsrichtung zulässt, und wobei das erste Verbindungselement einen Magnetrotor umfasst, der mittels eines von außerhalb des Verbindungsmittels auf das Verbindungsmittel einwirkenden Antriebsmagnetfeldes zu einer Drehbewegung innerhalb des Verbindungsmittels antreibbar ist, und die Bewegung des Halteteils von der Haltestellung in die Freigabestellung durch mechanische Wechselwirkung des Magnetrotors mit einem Mitnahmeelement des Halteteils antreibbar ist, dadurch gekennzeichnet, dass der Magnetrotor zwischen einer Ankopplungsstellung, in welcher der Magnetrotor mit dem Mitnahmeelement des Halteteils wechselwirkt, in eine Entkopplungsstellung, in welcher der Magnetrotor nicht mit dem Mitnahmeelement des Halteteils wechselwirkt, bewegbar ist. Aus der EP 1 056 953 sind Verbindungsmittel zum lösbaren Verbinden zweier Bauteile bekannt, die ein Kupplungsmittel umfassen, das bei Einwirkung eines zeitlich veränderlichen Antriebsmagnetfeldes von außerhalb des Verbindungsmittels mit dem Antrieb des Magnetfelds wechselwirkt, wodurch ein entsprechendes Halteteil von einer Halte- in eine Freigabestellung bewegbar ist. Einen solchen Mechanismus gilt es mit der vorliegenden Erfindung speziell für die Anwendung im Rahmen der o. g. Bauelemente für Verkleidungen für den Ladenbau, aber auch für andere Zwecke zu optimieren.

Damit stellt sich der vorliegenden Erfindung die Aufgabe, ein Verbindungsmittel zum lösbaren Verbinden benachbarter Bauelemente, Möbel oder Teile von diesen zu schaffen, mit dem eine besonders hohen Anforderungen in Hinblick auf Stabilität und Sicherheit genügende Verbindung geschaffen werden kann.

Diese Aufgabe wird dadurch gelöst, dass das erste Kupplungselement zwischen dem Gehäuse und dem Stift ein gewinde als Zwangsführung aufweist.

Das Verbindungsmittel besteht aus zwei zueinander korrespondierend ausgebildeten Kupplungselementen, von denen das erste einen in seiner Längsachsenrichtung verschiebbaren Stift aufweist. Dieser Stift kann von einer Vor- in eine Fixierposition verstellt werden, so dass der Stift gewissermaßen aus dem Gehäuse des ersten Kupplungselementes in das als Aufnahme ausgebildete zweite, in dem benachbarten Bauelement vorgesehenes Kupplungselement einfährt. Der Stift fixiert sich in der Aufnahme und die Verbindung zwischen den beiden Kupplungselementen ist vollzogen. Eine Zwangsführung zwischen dem Gehäuse des ersten Kupplungselementes und dem Stift gewährleistet dabei eine optimale Führung für den Stift und ein sicheres und exaktes Einfahren dieses Stiftes in die gegenüberliegende Aufnahme des zweiten Kupplungselementes. Ebenso bietet die Zwangsführung eine Kulisse mit entsprechenden Endpositionen (Vor- und Fixierposition) für den Stift. Dank der Zwangsführung verbleibt der Stift darüber hinaus in dieser Position, bis ggf. ein bewusstes Lösen der Verbindung herbeigeführt wird. Die Zwangsführung ist also beim Herstellen der Verbindung, wie unter Gesichtspunkten der dauerhaften Stabilität der Verbindung als besonders vorteilhaft anzusehen.

Erfindungsgemäß ist zwischen dem Gehäuse und dem Stift ein Gewinde vorgesehen, das als Zwangsführung zwischen diesen beiden Bauteilen dient. Damit ist vorgegeben, dass der Stift zwischen der Vor- und der Fixierposition durch eine kombinierte Längsverschiebung und Drehung verstellt wird. Das Gewinde bildet dabei eine Zwangskulisse dahingehend, dass beim Herstellen der Verbindung, also beim Ausfahren des Stiftes eine sichere Führung gewährleistet ist. Gleichzeitig ist durch das Gewinde verhindert, dass sich der Stift unter Lösen der Verbindung ungewollt von der Fixierposition wieder zurück in die Vorposition oder eine die Qualität der Verbindung ebenfalls gefährdende Zwischenposition begeben könnte.

Vorgesehen ist zudem, dass der Stift mit mindestens einem Anschlag ausgerüstet ist, welcher die vordere und/oder die hintere Endposition des Stiftes in dem Gehäuse markiert. Damit sind vordere und hintere Endposition des Stiftes in dem Gehäuse durch die jeweiligen Anschläge vorgegeben, die ein Festdrehen in dem Gehäuse in beide Richtungen verhindern.

Eine besonders zweckmäßige Ausführungsform hierzu sieht vor, dass als Anschlag ein in Querrichtung in den Stift eingesetzter Bolzen dient. Zweckmäßigerweise ist an zwei als Anschläge dienende Bolzen gedacht, die zu den jeweiligen Endpositionen korrespondieren. Solche Bohrungen mit dem eingesetzten Bolzen können in dem Gewinde, besser noch in einen an der Rückseite des Stiftes vorgesehenen Zapfen, auf den im Folgenden noch einzugehen sein wird, vorgesehen sein.

Die beschriebenen, durch Bolzen gebildeten stiftseitigen Anschläge wirken in Längsachsenrichtung des Stiftes, in dem sie ein Herausdrehen desselben aus dem Gehäuse bzw. ein Festdrehen in dem Gewinde verhindern. In Ergänzung hierzu ist daran gedacht, dass an der dem Gewinde zugewandten Innenseite des Gehäuses und/oder an der dem Gewinde abgewandten Innenseite des Gehäuses ein gehäuseseitiger Anschlag vorgesehen ist, um ein etwaiges Festsetzen der stiftseitigen Anschläge zu verhindern. Dank der gehäuseseitigen, vorzugsweise annähernd als Dreieck mit zwei Flanken ausgebildeten Kulisse an den jeweiligen Enden des Gehäuses für die stiftseitigen Anschläge wird vermieden, dass diese sich in das Gehäuse hineinfressen können. Vielmehr wird erreicht, dass stift- und gehäuseseitige Anschläge in der Endposition des Stiftes aneinander liegen, so dass z. B. der Stift nicht weiter gedreht werden kann und es dabei nicht zu Beeinträchtigungen der vorzugsweise aus Metall hergestellten Bauteile kommen kann.

Der Anschlag an der dem Gewinde abgewandten Innenseite des Gehäuses dient, wie beschrieben, primär dazu, ein Festsetzen des stiftseitigen Anschlags zu verhindern. In diesem Zusammenhang ist es zweckmäßig, wenn der gehäuseseitige Anschlag in den Deckel des Gehäuses integriert ist und zumindest annähernd die Form eines Dreiecks aufweist.

Alternativ zu einem solchen Anschlag zum verhindern des Festdrehens kommt auch eine Federung in Frage. Nach dieser Variante der Erfindung ist daran gedacht, dass der Stift in dem Gehäuse federnd gelagert ist, indem zwischen der Gehäuserückwand bzw. dem Gehäusedeckel und dem Stift eine Druckfeder positioniert ist. Diese gewährleistet den festen Sitz des Stiftes nach der Montage als Rücklaufsicherung. Damit kann dank entsprechende Einstellung der Druckfeder ausgeschlossen werden, dass sich der Sitz etwa durch Vibrationen oder andere dynamische Belastungen lockert und die Qualität der Verbindung zwischen den benachbarten Bauelementen oder Möbelteilen beeinträchtigt werden könnte.

Zusätzlich ist an der dem Gewinde abgewandten Innenseite des Gehäuses eine Federung vorgesehen, welche maßgeblich dazu dient, einen zusätzlichen Puffer für den Stift bzw. dessen rückwärtig angeordneten Zapfen zu schaffen. Da zweckmäßigerweise Gehäuse wie auch Stift aus Metall hergestellt sind, ist es hilfreich, zum Erreichen der beabsichtigten Wirkung hier eine Feder z. B. aus Kunststoff in Form eines federnden Druckelementes vorzusehen. Gedacht ist insbesondere an eine federnd gelagerte Kugel, die in einer entsprechenden Aufnahme an der abgewandten Seite des Gehäuses bzw. in dem Gehäusedeckel positioniert ist.

Erfindungsgäß ist zu der Herstellung der Verbindung zwischen den beiden Kupplungselementen an eine über Magnetismus steuerbare Verbindung gedacht. Dies bedeutet, dass benachbarte Bauelemente oder Möbelteile gleich welcher Form und Ausbildung miteinander verbunden werden, indem von außerhalb der eigentlichen Wandverkleidung oder des Möbels über ein temporäres magnetisches Feld die Herstellung der endgültigen Verbindung erfolgt, die auf demselben Wege auch wieder gelöst werden kann. In diesem Zusammenhang ist es vorteilhaft, wenn der Stift magnetisch ausgebildet und/oder lösbar mit einem Magneten verbunden ist, um die beschriebene magnetische Steuerung von außerhalb der Wandverkleidung oder des Möbels bewerkstelligen zu können. Dabei sollte der Magnet auf der Fläche gepolt sein, um die Drehbewegung von außerhalb auf den Magneten und damit den Stift ausüben zu können.

Die Funktion der vorzugsweise als Bolzen ausgebildeten Anschläge wurde bereits ausführlich beschrieben. Ein weiterer Vorteil dieser Bauelemente liegt darin, dass der Magnet von den als Anschlag dienenden Bolzen eingefasst sein kann. Die Bolzen dienen damit also zugleich zur Fixierung des Magneten auf dem Zapfen des Stiftes in oberer und/oder unterer Richtung, sodass ein Lösen des Magnetes ausgeschlossen werden kann.

Es wurde bereits darauf hingewiesen, dass zudem daran gedacht ist, dass der Stift einen Zapfen aufweist, auf den der Magnet aufgesetzt ist. Der Magnet selbst ist dabei in Form eines Rings ausgebildet, der über den stiftseitigen Zapfen geschoben werden kann, so dass Stift und Magnet eine Baueinheit bilden, die von außen über Magnetkraft in Zusammenspiel mit der Zwangsführung hin- und herbewegt bzw. in Torsion versetzt werden kann.

Die Erfindung zeichnet sich insbesondere dadurch aus, dass ein zweiteiliges Verbindungsmittel geschaffen ist, das besonders gut zum lösbaren Verbinden benachbarter Bauelemente, Möbel oder Teilen von diesen geeignet ist. Das Verbindungsmittel umfasst zwei zueinander korrespondierende und miteinander zu verbindende Kupplungselemente. Ein erstes Kupplungselement weist einen in einem Gehäuse in Längsachsenrichtung verstellbaren Stift auf, der zum Herstellen der Verbindung in eine durch das zweite Kupplungselement gebildete Aufnahme an dem benachbarten Bauelement, Möbel oder Teil von diesen eingefahren wird. Eine Zwangskulisse zwischen dem Stift und dem Gehäuse des ersten Kupplungselementes gewährleistet hier eine leichte und nicht störungsanfällige Montage sowie einen dauerhaft stabilen und belastbaren Sitz zwischen den Kupplungselementen. Ein Gewinde zwischen Gehäuse und Stift gibt dabei die jeweiligen Endpositionen des Stiftes in der Vor- wie in der Fixierposition vor. Die Handhabung erfolgt über temporäre magnetische Felder, über welche der Bolzen von außen in Drehung versetzt wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: das Schema der Verbindung zweier benachbarter Bauelemente,
- Figur 2: diese Verbindung nach dem Zusammenbau,
- Figur 3: ein Gehäuse ohne Stift im Schnitt,
- Figur 4: eine Vergrößerung des Ausschnitts aus Fig. 3,
- Figur 5: ein Gehäuse mit Stift in Explosionsdarstellung.
- Figur 6: ein Gehäuse mit Stift mit Magnet und Feder im Schnitt,
- Figur 7: das Gehäuse ohne Feder und ohne Magnet,
- Figur 8: das vordere Ende eines Stines,
- Figur 9: eine Variante zu Figur 8,
- Figur 10: eine Variante zu Figur 5,
- Figur 11: eine Variante zu Figur 6 und
- Figur 12: einen Gehäusedeckel.

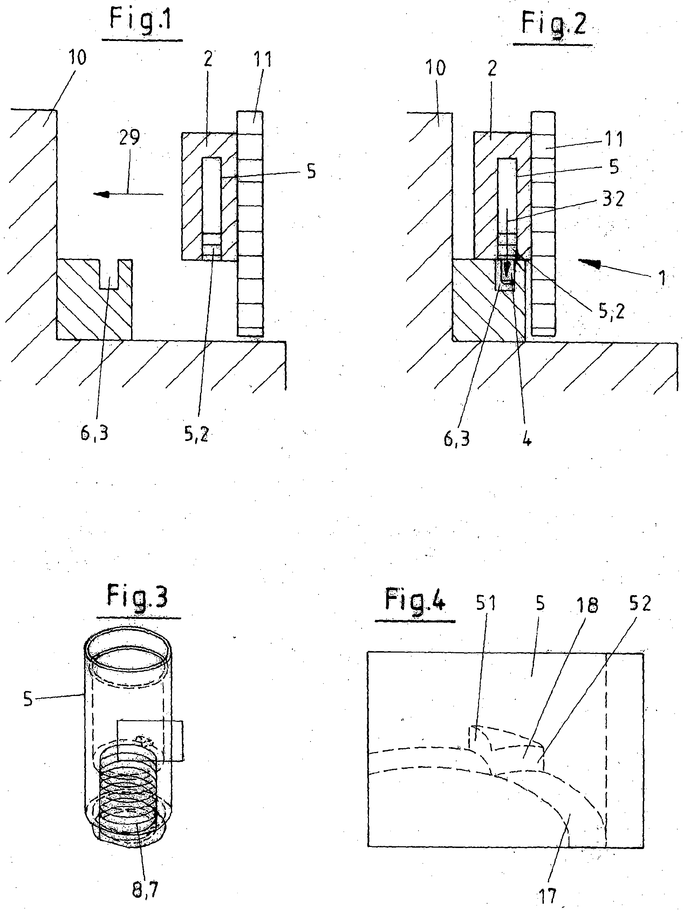

In Figur 1 ist schematisch dargestellt, wie die Verbindung zwischen zwei beliebig ausgebildeten Bauelementen 10, 11 bewerkstelligt wird. Zunächst werden die beiden Bauelemente 10, 11 in Pfeilrichtung 29 zusammengesetzt, ohne dass eine Verbindung bzw. Fixierung bestünde. In dieser beispielhaften Darstellung ist das ansonsten nicht näher beschriebene Bauelement 10 mit einem Kupplungselement 3.in Form einer Aufnahme 6 und das Bauelement 11 mit einem Kupplungselement 2 in Form eines hier nur angedeuteten Gehäuses 5 ausgerüstet.

Nach dem Zusammensetzen der Bauelemente 10, 11 erfolgt nun die eigentliche Fixierung, wie sie in Figur 2 schematisch dargestellt ist. In Pfeilrichtung 32 verschiebt sich, durch ein Werkzeug in Form eines Gerätes zur Erzeugung eines magnetischen Feldes, der Stift 4 in die in Figur 2 dargestellte ausgefahrene Fixierposition in die Aufnahme 6. Das Verbindungsmittel 1 zwischen den Bauelementen 10 und 11 ist damit durch Einfahren und/oder -rasten des Stiftes 4 in die Aufnahme 6 vollendet. Gegebenenfalls sind natürlich zur Verbindung der Bauelemente diverse weitere, gleiche oder andersartige Verbindungsmittel notwendig.

Im Schnitt zeigt Figur 3 ein Gehäuse 5 mit dem Innengewinde 8, das als Zwangsführung 7 für den ansonsten mit einem Außengewinde ausgestatteten Stift dient, so dass eine Führung mit entsprechenden Endpositionen (Vor-Fixierposition) und für den Stift in diesem Gewinde 7, 8 gegeben ist.

Figur 4 stellt in dem in Figur 3 angedeuteten Ausschnitt die Stirnseite 17 des Gehäuses jenseits des hier nicht dargestellten Gewindes dar. Mit dem Bezugszeichen 18 ist dabei der annähernd dreieckig geformte gehäuseseitige Anschlag mit den beiden Flanken 51, 52 bezeichnet, der ermöglicht, dass der stiftseitige, hier nicht dargestellte Anschlag sich bei Drehung des Stiftes nicht in dem Gehäuse 5 festsetzen kann.

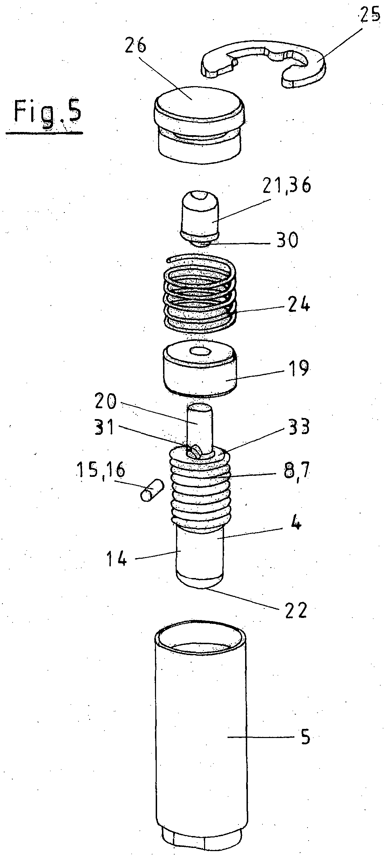

In der Explosionszeichnung gemäß Figur 5 sind die Bauteile in Form des Gehäuses 5, dem in dieses Gehäuse 5 einzusetzenden Stiftes 4 und der Zwangsführung 7 in Form des Gewindes 8 besonders gut zu erkennen. Der als Anschlag 15 dienende Bolzen 16 wird in die Bohrung 31 eingesetzt und markiert somit die Endposition des Stiftes in dem Gehäuse in der Fixierposition. Der Stift 4 ist an seinem hinteren Ende 33 mit dem Zapfen 20 versehen, auf welchen der Magnet 19 aufgesetzt werden kann, wenn es sich um die magnetische Ausführungsform des Verbindungsmittels handelt. Beim Verstellen des Stiftes 4 von der Fixier- zurück in die Vorposition und bei der übrigen Handhabung bildet die Federung 21 in Form des federnden Druckstücks 36 samt Kugel 30 einen Anschlag, um ggf. die Endposition des Stiftes in der Vorposition zu markieren. Mit 26 ist der Deckel und mit 25 der diesen Deckel 26 klemmende Sprengring bezeichnet. Mit dem Bezugszeichen 24 ist die Druckfeder versehen, die den festen Sitz des Stiftes 4 nach der Montage als Rücklaufsicherung gewährleistet. Das vordere Ende 22 und/oder die Seitenfläche 14 des Stiftes 4 können mit einer Schlüsselfläche versehen sein.

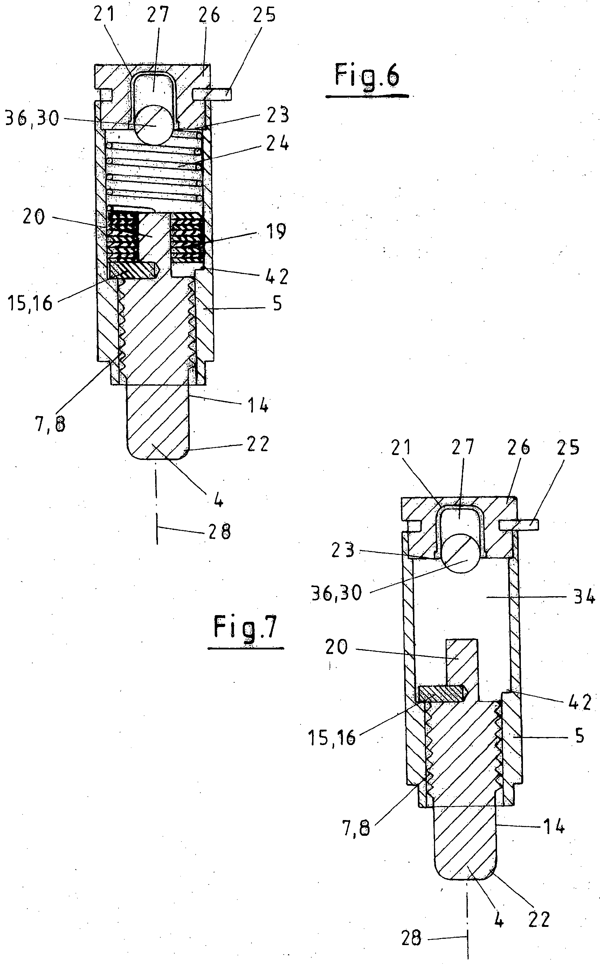

Einen Stift 4 in seinem Gehäuse 5 zeigt Figur 6 im Schnitt, und zwar in der Variante mit dem Magneten 19. Der Stift 4 weist an seinem hinteren Ende 33 den Zapfen 20 auf, auf den der Magnet 19 dann aufgesetzt ist. Daran schließt sich die Feder 24 an. Geschlossen wird das Gehäuse 5 schließlich durch den Deckel 26 bzw. den Sprengring 25. Als Puffer für den Stift 4, genauer gesagt, für den Zapfen 20 dient das federnde Druckstück 36 an der dem Stift 4 abgewandten Innenseite 23 des Gehäuses 5. Hierzu ist eine Kugel 30 vor einem Hohlraum 27 so angeordnet, dass eine entsprechende Federwirkung erzielt werden kann, wenn der Stift 4 mit dem Zapfen 20 sich in Richtung der Längsachse 28 entsprechend verschiebt. Das Gewinde 8 zwischen Stift 4 und der Innenwand der Gehäuses 5 bildet die Zwangskulisse 7 für den Stift 4 beim Verschieben in Längsachsenrichtung 28 zwischen der Vor- in die hier gezeigte Fixierposition, in welcher der Bolzen 16 als Anschlag 15 in Hinblick auf die dem Gewinde 8 zugewandte Innenseite 42 des Gehäuses 5 dient. Eine Schlüsselfläche für Montagewerkzeuge kann an dem vorderen Ende 22 und/oder der Seitenfläche 14 des Stiftes 4 vorhanden sein.

Eine Variante zu Figur 6 ohne Magneten zeigt Figur 7. Erkennbar ist hier ein vergleichsweise großer Hohlraum 34 für den Stift bei einer etwaigen Verschiebung aus dieser Fixierposition in Richtung Gehäusedeckel 26 zur Innenseite 23 des Gehäuses 5. Auch hier gewährleistet die Federung 21 samt Kugel 30 als federndes Druckstück 36 die entsprechende Federung für den Stift 4 bzw. den Zapfen 20.

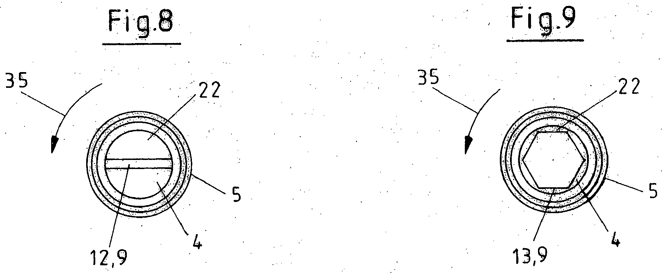

Vom vorderen Ende 22 aus betrachtet zeigt Figur 8 den Stift 4 in dem Gehäuse 5. Der Stift 4 weist dort eine Schlüsselfläche 9, hier einen Schlitz 12 auf, um ein Werkzeug, hier einen Schraubenzieher, ansetzen zu können, damit der Stift 4 dann in entsprechende Drehbewegungen, symbolisiert durch den Pfeil 35, versetzt werden kann, um ihn von der Vor- in die Fixierposition zu bringen.

Eine Variante dazu zeigt Figur 9 mit einem Stift, welcher an seinem vorderen Ende 22 eine Schlüsselfläche in Form eines Mehrkants 13, hier eines Sechskants, aufweist.

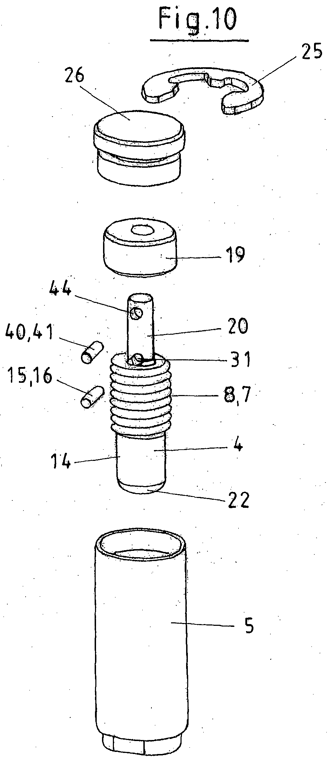

Figur 10 zeigt in einer Variante zu Figur 5 das Gehäuse 5 mit dem in dieses einzusetzenden Stift und der Zwangsführung 7 in Form des Gewindes 8. Als Anschläge 15, 40 für den Magneten 19, nachdem dieser auf den Zapfen 20 des Stiftes 4 aufgesetzt wurde, dienen die beiden Bolzen 16 und 41, die in die Bohrungen 31, 44 eingesetzt werden. Zugleich fassen die Bolzen 41, 16 den Magneten 19 in seiner Position auf dem Zapfen 20 ein, sodass der Magnet 19 entsprechend gehalten ist. Mit 26 ist wiederum der Deckel und mit 25 der diesen Deckel 26 klemmende Sprengring bezeichnet.

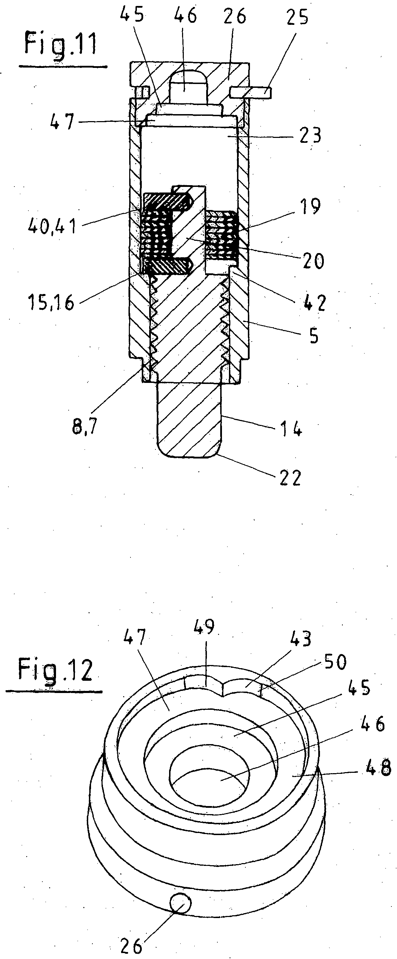

In dem Schnitt gemäß Figur 11 als Variante zu Figur 6 ist der Magnet 19 jetzt auf den Zapfen 20 aufgesetzt und von den beiden Bolzen 16, 41 eingefasst. Der Stift 4 befindet sich hier in seiner maximalen Fixierposition und ist komplett ausgefahren; der als Anschlag 15 dienende Bolzen 16 befindet sich an der dem Gewinde 8 zugewandten Innenseite 42 des Gehäuses 5. An der gegenüber liegenden, dem Gewinde 8 abgewandten Innenseite 23 des Gehäuses 5 ist der Deckel 26 aufgesetzt. In diesen Deckel 26 ist ein gehäuseseitiger Anschlag integriert, der hier allerdings nicht erkennbar ist. Der Deckel 26 weist mehrere Abstufungen 45, 46, 47 auf, auch um hier Platz für den Zapfen 20 bzw. den als Anschlag 40 dienenden Bolzen 41 zu schaffen.

Schließlich zeigt Figur 12 den Gehäusedeckel 26 mit Blick auf seine Innenseite 48. Erkennbar ist neben den Abstufungen 47, 45, 46 insbesondere der Anschlag 43 im Bereich der äußersten Abstufung 47. Die Ausbildung des Gehäusedeckels 26 entspricht damit der Ausbildung des Gehäuses am dem Gewinde zugewandten Ende. Auch hier ist der Anschlag 43 annähernd dreieckig mit seinen beiden nach innen vorstehenden Flanken 49, 50 ausgebildet. Dieser Anschlag 43 ermöglicht, dass der in Figur 11 bezeichnete Anschlag 40 in Form des Bolzens 41 sich bei Drehung des Stiftes nicht in dem Gehäusedeckel 26 festsetzen kann. Stattdessen fährt der Bolzen 41 gewissermaßen über die durch den Anschlag 43 gebildete Rampe, durch die verhindert ist, dass der Bolzen 41 aus der Abstufung 47 herauslaufen könnte.

## Patentansprüche

1. Verbindungsmittel (1) zum lösbaren Verbinden benachbarter Bauelemente (10, 11), Möbel oder Teilen von diesen, mit zwei miteinander zu verbindenden Kupplungselementen (2, 3), wobei das erste Kupplungselement (2) einen in einem Gehäuse (5) in Längsachsenrichtung verstellbaren Stift (4) und das zweite Kupplungselement (3) eine Aufnahme (6) für diesen Stift (4)
aufweist, wobei die Kupplungselemente (2, 3) bei Einwirkung eines temporären Antriebsmagnetfeldes von außerhalb des Verbindungsmittels (i) mit dem Antrieb des Magnetfelds wechselwirken, wodurch der Stift (4) zwischen einer Fixier- und einer Vorposition bewegbar ist, und wobei das erste Kupplungselement (2) zwischen dem Gehäuse (5) und dem Stift (4) eine Zwangsführung (7) aufweist, **dadurch gekennzeichnet,**
**dass** zwischen dem Gehäuse (5) und dem Stift (4) ein Gewinde (8) vorgesehen ist, das als Zwangsführung (7) zwischen dem Gehäuse (5) und dem Stift (4) dient.

2. Verbindungsmittel nach Anspruch 1,
**dadurch gekennzeichnet,**
**dass** der Stift (4) mit mindestens einem Anschlag (15, 40) ausgerüstet ist, welcher eine vordere und/oder eine hintere Endposition des Stiftes (4) in dem Gehäuse (5) markiert.

3. Verbindungsmittel nach Anspruch 2,
**dadurch gekennzeichnet,**
**dass** als Anschlag (15, 40) ein in Querrichtung in den Stift (4) eingesetzter Bolzen (16, 41) dient.

4. Verbindungsmittel nach Anspruch 2,
**dadurch gekennzeichnet,**
**dass** an der dem Gewinde (8) zugewandten Innenseite (42) des Gehäuses (5) und/oder an der dem Gewinde (8) abgewandten Innenseite (23) des Gehäuses (5) ein gehäuseseitiger Anschlag (18, 43) vorgesehen ist, um ein etwaiges Festsetzen des stiftseitigen Anschlags (15, 40) zu verhindern.

5. Verbindungsmittel nach Anspruch 4,
**dadurch gekennzeichnet,**
**dass** der gehäuseseitige Anschlag (43) in den Deckel (26) des Gehäuses (5) integriert ist.

6. Verbindungsmittel nach Anspruch 1,
**dadurch gekennzeichnet,**
**dass** der Stift (4) in dem Gehäuse (5) federnd gelagert ist.

7. Verbindungsmittel nach Anspruch 6,
**dadurch gekennzeichnet,**
**dass** an einer dem Gewinde (8) abgewandten Innenseite (23) des Gehäuses (5) eine Federung (21) vorgesehen ist.

8. Verbindungsmittel nach Anspruch 1,
**dadurch gekennzeichnet,**
**dass** der Stift (4) magnetisch ausgebildet und/oder lösbar mit einem Magneten (19) verbunden ist.

9. Verbindungsmittel nach Anspruch 8,
**dadurch gekennzeichnet,**
**dass** der Magnet (19) von als Anschlag (15, 40) dienenden Bolzen (16, 41) eingefasst ist.

10. Verbindungsmittel nach Anspruch 8,
**dadurch gekennzeichnet,**
**dass** der Stift (4) einen Zapfen (20) aufweist, auf den der Magnet (19) aufgesetzt ist.

## Claims

1. Joining means (1) to detachably join adjacent components (10,11), furniture or parts thereof, the joining means comprising two coupling elements (2, 3) to be joined to each other, wherein the first coupling element (2) comprises a pin (4) that can be adjusted in a housing (5) in the direction of the longitudinal axis and the second coupling element (3) comprises a receptacle (6) for said pin (4), wherein the coupling elements (2, 3) under influence of a temporary magnetic field actuation from outside of the joining means (1) interact with the actuation of the magnetic field, whereby the pin (4) is movable between a fixation position and a pre-position, and wherein
the first coupling element (2) comprises a restricted guidance (7) between the housing (5) and the pin (4),
**characterized in that**
a thread (8) that serves as a restricted guidance (7) between the housing (5) and the pin (4) is provided between the housing (5) and the pin (4).

2. Joining means according to claim 1,
**characterized in that**
the pin (4) is equipped with at least a stop (15, 40) that marks the front and/or the rear end position of the pin (4) in the housing (5).

3. Joining means according to claim 2,
**characterized in that**
a bolt (16, 41) inserted in lateral direction into the pin (4) serves as a stop (15, 40).

4. Joining means according to claim 2,
**characterized in that**
a housing-sided stop (18, 43) is provided at the inner surface (42) of the housing (5) that faces the thread (8) and/or at the inner surface (23) of the housing (5) that is averted from the thread (8) to avoid a possible locking of the pin-sided stop (15, 40).

5. Joining means according to claim 4,
**characterized in that**
the housing-sided stop (43) is integrated into the cover (26) of the housing (5).

6. Joining means according to claim 1,
**characterized in that**
the pin (4) in the housing (5) is springily mounted.

7. Joining means according to claim 6,
**characterized in that**
a spring (21) is provided at the inner surface (23) of the housing (5) that is averted from the thread (8).

8. Joining means according to claim 1,
**characterized in that**
the pin (4) is formed magnetically and/or is joined detachably with a magnet (19).

9. Joining means according to claim 8,
**characterized in that**
the magnet (19) is surrounded by the bolts (16, 41) that serve as a stop (15, 40).

10. Joining means according to claim 8,
**characterized in that**
the pin (4) comprises a tappet (20) on which the magnet (19) is fitted.

## Revendications

1. Moyen de liaison (1) pour la liaison amovible d'éléments de construction contigus (10, 11), de meubles ou parties de ceux-ci, avec deux éléments de couplage (2, 3) à relier entre eux, dans lequel le premier élément de couplage (2) présente une tige (4) réglable dans un boîtier (5) dans le sens axial longitudinal et le second élément de couplage (3) présente un logement (6) pour cette tige (4), dans lequel les éléments de couplage (2, 3) interagissent lors de l'action d'un champ magnétique d'entraînement temporaire de l'extérieur du moyen de liaison (1) avec l'entraînement du champ magnétique, la tige (4) étant ainsi mobile entre une position de fixation et une pré-position, et dans lequel le premier élément de couplage (2) présente un guidage à force (7) entre le boîtier (5) et la tige (4), **caractérisé en ce que**
un filet (8) est prévu entre le boîtier (5) et la tige (4), lequel sert de guidage à force (7) entre le boîtier (5) et la tige (4).

2. Moyen de liaison selon la revendication 1,
**caractérisé en ce que**
la tige (4) est équipée d'au moins une butée (15, 40) qui marque une position d'extrémité avant et/ou une position d'extrémité arrière de la tige (4) dans le boîtier (5).

3. Moyen de liaison selon la revendication 2,
**caractérisé en ce que**
un boulon (16, 41) inséré dans le sens transversal dans la tige (4) sert de butée (15, 40).

4. Moyen de liaison selon la revendication 2,
**caractérisé en ce que**
une butée (18, 43) côté boîtier est prévue sur le côté intérieur (42) tourné vers le filet (8) du boîtier (5) et/ou sur le côté intérieur (23) éloigné du filet (8) du boîtier (5) afin d'empêcher une éventuelle fixation de la butée côté tige (15, 40).

5. Moyen de liaison selon la revendication 4,
**caractérisé en ce que**
la butée (43) côté boîtier est intégrée dans le couvercle (26) du boîtier (5).

6. Moyen de liaison selon la revendication 1,
**caractérisé en ce que**
la tige (4) est logée sur ressorts dans le boîtier (5).

7. Moyen de liaison selon la revendication 6,
**caractérisé en ce que**
une suspension (21) est prévue sur un côté intérieur (23) éloigné du filet (8) du boîtier (5).

8. Moyen de liaison selon la revendication 1,
**caractérisé en ce que**
la tige (4) est réalisée magnétiquement et/ou reliée de manière amovible à un aimant (19).

9. Moyen de liaison selon la revendication 8,
**caractérisé en ce que**
l'aimant (19) est entouré par des boulons (16, 1) servant de butée (15, 40).

10. Moyen de liaison selon la revendication 8,
**caractérisé en ce que**
la tige (4) présente un tenon (20), sur lequel l'aimant (19) est placé.
